# DEMANDE DE BREVET EUROPEEN

(11) **EP 1 072 886 A1**
(43) Date de publication de la demande: **31.01.2001**
(21) Numéro de dépôt: 00401457.7
(22) Date de dépôt: 25.05.2000
(51) Int. Cl.: G01N 31/10

(54) **Méthode et disposif multi-réacteurs automatique d'évaluation de catalysateurs avec une charge lourde d'hydrocarbures**

(30) Priorité: 28.06.1999 FR 9908282
(71) Demandeur: INSTITUT FRANCAIS DU PETROLE, 92852 Rueil-Malmaison Cedex (FR)
(72) Inventeur: Deves, Jean-Marie, 78540 Vernouillet (FR); Bernhard, Jean-Yves, 91450 Mennecy (FR); Chatelain, Bernard, 95 Jouy le Moutier (FR); Toutant, Pierre, 95130 Franconville-la Garrenne (FR); Brandely, José, 91600 Savigny sur Orge (FR); Guitton, Corinne, 78400 Chatou (FR)

(57) **Abrégé**

La présente invention concerne une méthode et un appareillage pour effectuer des mesures sur un effluent résultant d'une réaction chimique ayant lieu dans un réacteur contenant un catalyseur. Il comporte en combinaison:
- au moins deux réacteurs,
- des moyens d'injection d'au moins une charge dans chacun des réacteurs,
- des moyens de séparation des phases gaz et liquide en aval de chacun des réacteurs,
- des moyens de distribution pour diriger la phase gazeuse issue des moyens de séparation vers des premiers moyens d'analyse et de mesure, pendant que les autres phases gazeuses issues des autres séparateurs sont dirigées vers une évacuation,
- des seconds moyens d'analyse et de mesure sur la phase liquide issue des moyens de séparation,
- des moyens de contrôle et de commande automatiques de la réaction chimique dans lesdits réacteurs, du cycle de l'analyse et de la mesure sur la phase gazeuse, et du cycle d'analyse et de mesure sur la phase liquide.

## Description

La présente invention concerne un appareillage automatique de test multi-réacteurs de réaction chimique en présence éventuelle d'un catalyseur. Cet appareillage fonctionnant sous forte pression et haute température, permet d'utiliser comme réactif des coupes hydrocarbures lourdes issues de la distillation sous vide du pétrole brut. Cet appareillage comprend un système élaboré d'automatisation qui permet l'évaluation rapide et simultanée de plusieurs jeux de conditions opératoires. Il est ainsi possible d'acquérir des données sur l'avancement de la réaction et sur les performances de catalyseurs solides.

Les produits de réaction sont séparés à la sortie des réacteurs en deux phases (gazeuse et liquide). Les fractions gazeuses sont analysées en ligne par chromatographie, les fractions liquides sont analysées par distillation simulée. La détermination des performances s'effectuent grâce à l'établissement automatique de bilan matière. L'automatisation poussée de l'ensemble permet de réaliser des cycles simultanés de tous les réacteurs sans intervention de l'opérateur.

Le développement des procédés industriels de raffinage et de pétrochimie nécessite d'acquérir des données sur les réactions chimiques qui s'y déroulent. Lorsque ces réactions sont catalysées, la recherche et le développement des catalyseurs requis nécessitent d'évaluer les performances de ces derniers. Au laboratoire, ces acquisitions de données et évaluation sont effectuées dans des installations pilotes qui reproduisent à petite échelle les conditions du fonctionnement industriel.

Il existe de nombreux types d'appareillage permettant de mesurer le degré d'avancement de réactions chimiques ou l'activité de catalyseurs solides. Dans le domaine du raffinage pétrolier et de la pétrochimie, l'étendue des conditions opératoires dans lesquelles s'effectuent ces mesures est la suivante :
- pression comprise entre 1 10⁵ et 3 10⁷ Pa,
- température comprise entre température ambiante et 800°C,
- débits de réactif liquide et/ou gazeux exprimés sous forme de débit volumique horaire par unité de volume de réacteur ou de catalyseur (VVH) compris entre 0,01 et 100 h⁻¹ et par le rapport des débits molaires de gaz (le plus souvent de l'hydrogène) et l'hydrocarbure réactif liquide (H2/HC) compris entre 0,01 et 50.

Le choix plus précis des conditions opératoires dépend du type de procédé ou de catalyseur considéré. Il peut s'agir, par exemple, de l'une des applications industrielles suivantes : le reformage, l'isomérisation, l'hydrocraquage, l'hydrotraitement, l'hydrogénation sélective, la transformation des aromatiques, ou encore l'oxydation.

Les catalyseurs solides sont mis en oeuvre sous forme de billes, extrudés ou de poudre de granulométrie variable. Les quantités de catalyseurs utilisées dans ces installations pilote sont généralement comprises entre quelques grammes à quelques dizaines ou centaines de grammes. Ces quantités sont relativement importantes et peuvent constituer une limitation à l'utilisation de ces installations pilotes. En particulier, lors de la recherche ou du développement d'un nouveau catalyseur, les quantités de solide catalytique disponibles pour test sont assez souvent réduites (inférieures au gramme) et le nombre de variantes de solide catalytique peut être important. Il en résulte que tous les échantillons disponibles ne sont pas nécessairement testés.

Le fonctionnement le plus isotherme possible est recherché pour les réacteurs. En général, ceci est obtenu en plaçant le réacteur dans un four constitué de plusieurs zones régulées indépendamment en température (document US 5770154). Les dimensions des réacteurs font également l'objet de beaucoup d'attentions. En particulier, le rapport longueur sur diamètre du lit catalytique est choisi la plupart du temps compris entre 50 et 200 pour garantir un écoulement correct des réactifs et des produits au travers du catalyseur, faute de quoi des phénomènes limitants de diffusion, ou de rétro mélange perturbent la mesure des taux d'avancements et de performances du catalyseur.

Les catalyseurs requièrent généralement avant la phase de réaction proprement dite, une phase d'activation qui transforme un ou plusieurs de leurs constituants en élément réellement actif pour la catalyse. Il peut s'agir d'une réduction d'oxyde sous hydrogène dans le cas des catalyseurs métalliques supportés ou encore d'une sulfuration en présence d'un précurseur soufré pour les catalyseurs à base de sulfures métalliques. Dans les installations pilotes classiques qui présentent de grands volumes morts et une inertie thermique importante en raison de la taille des fours, cette phase d'activation est généralement longue (typiquement de plusieurs heures à plusieurs dizaines d'heures).

La nature du réactif utilisé (le plus souvent un hydrocarbure ou un mélange d'hydrocarbures) dépend de l'application envisagée. Il peut s'agir d'un hydrocarbure pur comme par exemple du normal hexane, du normal heptane, ou le cyclo hexane ou encore de coupes pétrolières plus ou moins lourdes ou plus ou larges comme par exemple les essences, les gazoles ou distillats issus de la distillation des pétroles bruts. Les quantités de réactif consommées dépendent bien sûr de la dimension du réacteur et de la durée de fonctionnement. Mais le plus souvent, les performances sont calculées à partir de la réalisation de bilans matière entrée-sortie se déroulant sur des périodes relativement longues (de quelques heures à plusieurs dizaines d'heures). Ces durées sont nécessaires pour recueillir en quantité suffisante (plusieurs litres à plusieurs dizaines de litres) les produits pour établir un bilan matière précis. L'utilisation de molécule hydrocarbonée pure, de coût de fabrication élevé, n'est pas toujours possible dans ces conditions.

Par ailleurs, durant le déroulement de la période d'évaluation du bilan matière qui peut être longue, le catalyseur est susceptible de connaître une certaine deactivation. L'activité du catalyseur n'étant pas la même entre le début et la fin du bilan matière, les performances calculées in fine ne reflètent que d'un comportement moyen du catalyseur éloigné de l'évolution réelle des performances en fonction du temps.

Les effluents sortant des réacteurs sont classiquement séparés par détente et refroidissement en deux phases : liquide et gazeuse dont les caractéristiques et compositions sont analysées séparément. Ces opérations de séparation et d'analyses séparées induisent inévitablement des pertes en produits qui diminuent la précision du bilan matière global. Dans certains cas, l'analyse de la totalité des produits n'est pas réalisable en une seule fois sur un analyseur chromatographique unique. Il peut être alors possible de réaliser une analyse en ligne avant séparation liquide/gaz conjointement à une analyse de la fraction gazeuse prélevée après séparation. Ceci permet d'établir des bilans matière précis dans ce cas (document US 5266270).

L'automatisation des installations pilote classiques reste assez souvent peu développée. La dimension de ces installations et la prise en compte des règles de sécurité liée à un fonctionnement automatique rendent cette automatisation complexe et onéreuse. En particulier, les conditions opératoires fixant la sévérité à laquelle se déroule la réaction (température ou débit volumique de réactif) sont le plus souvent fixées manuellement par l'opérateur de l'installation.

En résumé, les installations pilotes classiques couramment utilisées pour mesurer l'avancement de réaction chimique et les performances de catalyseurs présentent un certain nombre d'inconvénients parmi lesquels on peut citer :
- la nécessité de disposer de grande quantité de catalyseur et de réactif,
- la longue durée de mise en régime et d'établissement de bilan matière nécessaire à la détermination des performances,
- les performances reflètent d'un fonctionnement moyen du catalyseur sur une période relativement longue,
- la fréquence de mesure des performances est relativement faible,
- l'automatisation complète du fonctionnement est difficile et onéreuse à réaliser.

Ces désavantages font que les installations pilotes classiques sont assez mal adaptées à la sélection rapide et précise ("screening"), parmi de nombreux solides catalytiques, des solides les plus intéressants pour le développement d'un nouveau catalyseur ou l'étude d'une nouvelle réaction.

Ainsi, la présente invention concerne un appareillage pour effectuer des mesures sur un effluent résultant d'une réaction chimique ayant lieu dans un réacteur contenant un catalyseur. Il comporte en combinaison:
- au moins deux réacteurs,
- des moyens d'injection d'au moins une charge dans chacun des réacteurs,
- des moyens de séparation des phases gaz et liquide en aval de chacun des réacteurs,
- des moyens de distribution pour diriger la phase gazeuse issue des moyens de séparation vers des premiers moyens d'analyse et de mesure, pendant que les autres phases gazeuses issues des autres séparateurs sont dirigées vers une évacuation,
- des seconds moyens d'analyse et de mesure sur la phase liquide issue des moyens de séparation,
- des moyens de contrôle et de commande automatiques de la réaction chimique dans lesdits réacteurs, du cycle de l'analyse et de la mesure sur la phase gazeuse, et du cycle d'analyse et de mesure sur la phase liquide.

Les moyens de distribution peuvent comporter au moins deux voies d'entrée et deux voies de sorties, au moins un conduit en boucle fermée divisée en quatre tronçons par quatre éléments d'obturation commandés; chacune desdites quatre voies communique avec un seul tronçon de façon que les voies d'entrée soient liées à deux tronçons opposés et les voies de sortie liées aux deux autres tronçons.

L'appareillage peut comporter quatre réacteurs.

Les moyens de distribution peuvent comporter deux conduits en boucle et les voies de sortie peuvent communiquer entre elles deux à deux de façon à constituer un dispositif de distribution à quatre voies d'entrées et deux voies de sorties.

Les réacteurs peuvent avoir un diamètre interne compris entre 0,5 et 3 cm, de préférence entre 1 et 2 cm, une longueur comprise entre 10 et 50 cm, de préférence entre 15 et 25 cm.

La présente invention concerne également une méthode d'analyse et de mesure sur un effluent produit par une réaction chimique ayant lieu dans un réacteur contenant un catalyseur, dans laquelle on effectue les étapes suivantes:
- on dispose d'au moins deux réacteurs,
- on injecte au moins une charge dans chacun des réacteurs,
- on sépare l'effluent produit par chacun des réacteurs en une phase liquide et une phase gazeuse,
- on dirige alternativement la phase gazeuse vers des moyens de mesure et d'analyse par des moyens de distribution,
- on effectue des analyses et des mesures sur la phase liquide,
- on contrôle le déroulement des cycles de réaction, d'analyse et de mesure de chacune des phases à l'aide de moyens de contrôle et de commande automatiques.

On peut déterminer les bilans matières de chacune des réactions.

On peut contrôler la température et la pression des effluents gazeux entre la sortie des moyens de séparation et les moyens de mesure et d'analyse, y compris dans les moyens de distribution, de façon que ledit effluent reste gazeux.

La méthode et l'appareillage selon l'invention peuvent être avantageusement appliqués pour comparer les caractéristiques de différents catalyseurs employés dans chacun des réacteurs et/ou pour déterminer les conditions optimales de mise en oeuvre d'un catalyseur pour une réaction déterminée en faisant varier les paramètres de ladite réaction dans chacun des réacteurs.

L'objet de l'appareillage selon l'invention est donc multiple. Il permet notamment :
- la mesure automatique d'avancements de réactions chimiques et de performances catalytiques en parallèle sur plusieurs réacteurs,
- l'utilisation de quantité faibles de catalyseur compatible avec une sélection rapide sur un grand nombre d'échantillons,
- une mise en oeuvre isotherme du catalyseur dans les réacteurs,
- l'analyse automatique et en ligne des produits gazeux de réaction de chacun des réacteurs et l'analyse par distillation simulée des fractions liquides recueillies,
- la mesure ponctuelle et fréquente des performances réactionnelles et catalytiques,
- le déroulement complet des cycles de fonctionnement sans intervention de l'opérateur.

La présente invention sera mieux comprise et ses avantages apparaîtront plus clairement à la lecture de la description qui suit, illustrée par les figures ci-après annexées, parmi lesquelles:
- La figure 1 représente le schéma de principe d'un appareil selon l'invention.
- La figure 2 montre un exemple de diagramme de fonctionnement d'un réacteur.
- La figure 3 illustre le fonctionnement optimisé d'un l'appareil à quatre réacteurs.
- Les figures 4a, 4b, 4c et 4d représentent le principe d'une vanne de sélection de l'appareillage selon l'invention.

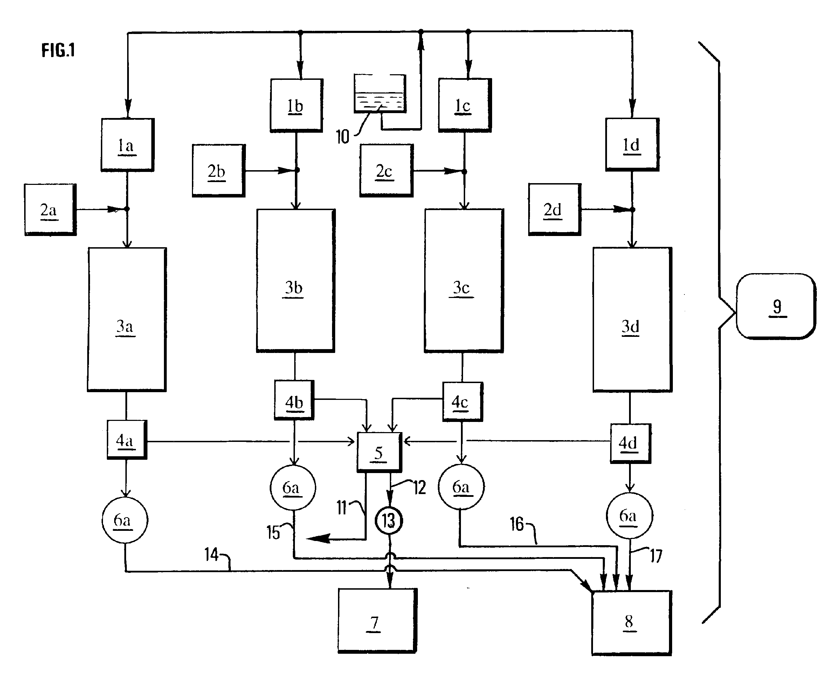

L'appareillage selon l'invention dont un exemple de schéma de principe pour quatre ensembles de réaction (indice a, b, c et d) est donné en figure 1, est constitué par les différents sous ensembles suivants :
- un système d'injection des réactifs gazeux (2a à 2d) et liquide (1a à 1d) connecté à chacun des réacteurs 3a, 3b, 3c et 3d,
- une section réactionnelle (3a à 3d) comprenant plusieurs micro-réacteurs et leur système de chauffage,
- un système de séparation liquide/gaz (4a à 4d) en sortie de chacun des réacteurs,
- des moyens de distribution (5) des effluents gazeux sortant des réacteurs,
- un système analytique (7) avec prélèvement en ligne de l'échantillon à analyser,
- un système de collection des échantillons de produits liquides (6a à 6d),
- un système d'analyse des produits liquides (8) par distillation simulée,
- un automate de contrôle/commande (9) gérant l'ensemble.

Chacun des systèmes d'injection de réactif gazeux (2a à 2d) est constitué d'un détendeur-régulateur de pression, d'une soupape de sécurité, d'un capteur de pression et d'un régulateur de débit massique. Le réactif gazeux est le plus souvent de l'hydrogène. Le détendeur-régulateur de pression permet de maintenir une pression constante à l'entrée du réacteur (variable entre 0 et 1,8 10⁷ Pa en relatif) à partir de la pression d'alimentation disponible. La gamme de débit assuré par le régulateur massique s'étend de 5 à 500 l/h avec une précision relative de 1%. Ces régulateurs peuvent être, par exemple, les modèle 5850E commercialisés par la marque BROOKS.

Le réactif liquide est injecté dans chaque réacteur au moyen d'une pompe (1a à 1d) qui peut être de type piston d'un volume total d'au moins 500 cm³ comme par exemple les pompes modèle 500D de la marque ISCO. Ce type de pompe permet d'injecter sans à-coup à forte pression et avec une grande précision de très petits débits de liquide (compris entre 0,05 et 100cm³/h). Si la viscosité à température ambiante du réactif n'est suffisante pour assurer une injection correcte, cette pompe doit être équipée d'un système permettant son chauffage à température modérée (50 à 120°C). De la même manière, le pot d'alimentation 10 de la pompe 1a (ou 1b, 1c, 1d) et les lignes de circulation du réactif entre le pot de charge 10, la pompe et le réacteur doivent être chauffés pour les réactifs liquides de viscosité insuffisante à température ambiante. Le mélange des réactifs liquides et gazeux s'effectue en amont du réacteur.

Dans le cas où l'activation du catalyseur requièrent la présence d'un composé chimique particulier, il est possible d'alimenter la pompe d'injection du réactif liquide à partir d'un autre pot d'alimentation contenant ce composé dissous dans un solvant.

Les réacteurs utilisés ou micro-réacteurs ont un diamètre interne compris entre 0,5 et 3 cm, préférentiellement entre 1 et 2 cm pour une longueur comprise entre 10 et 50 cm, préférentiellement entre 15 et 25 cm. Ils sont positionnés verticalement dans un four. Le sens d'écoulement des réactifs peut être ascendant ou descendant. Ces réacteurs sont constitués d'acier réfractaire (par exemple de type Inconel 625). Le lit cylindrique de catalyseur est situé dans leur partie centrale, il contient entre 0,1 et 10 g de catalyseur. Ce lit est précédé d'un lit de matériau inerte (par exemple carbure de silicium) de même granulométrie que le catalyseur dont l'utilité est d'assurer le préchauffage et la vaporisation des réactifs. Ces réacteurs sont équipés axialement de thermocouples de petit diamètre (par exemple 0,5 mm) permettant de mesurer la température en différents points selon l'axe longitudinal. Le four chauffant de ces réacteurs est constitué d'au moins deux (préférentiellement quatre) zones indépendantes relativement à la régulation de température. La première zone correspond à la zone de préchauffage et de vaporisation des réactifs, la seconde au lit catalytique. La présence de différentes zones régulées individuellement garantit un fonctionnement isotherme du réacteur selon son axe longitudinal.
Le système (4a à 4d) situé en sortie de chacun des réacteurs est constitué de deux enceintes successives de séparation liquide/gaz. Un détendeur à pression atmosphérique est installé sur la ligne de sortie de la fraction gazeuse. Ce détendeur peut être par exemple un modèle type déverseur à dôme de marque TESCOM. Pour assurer une séparation franche entre les deux fractions liquide et gazeuse, la partie basse de la première enceinte de séparation est maintenue à une température moyenne (entre 30 et 60°C) alors que la partie haute de cette enceinte est refroidie entre 0 et 25°C. La seconde enceinte est à température ambiante.

Les moyens de distribution (5) comportent un ensemble de vannes qui permet la commutation d'un des flux gazeux sortant des séparateurs 4a, 4b, 4c, 4d vers l'analyseur (7) ou vers l'évacuation, respectivement par les lignes 12 et 11. A un instant donné, une seule voie de sortie des séparateurs 4 est commutée sur la voie analyseur, les autres voies étant commutées vers l'évent. Un compteur volumétrique 13 du débit gazeux est installé sur la voie analyseur.

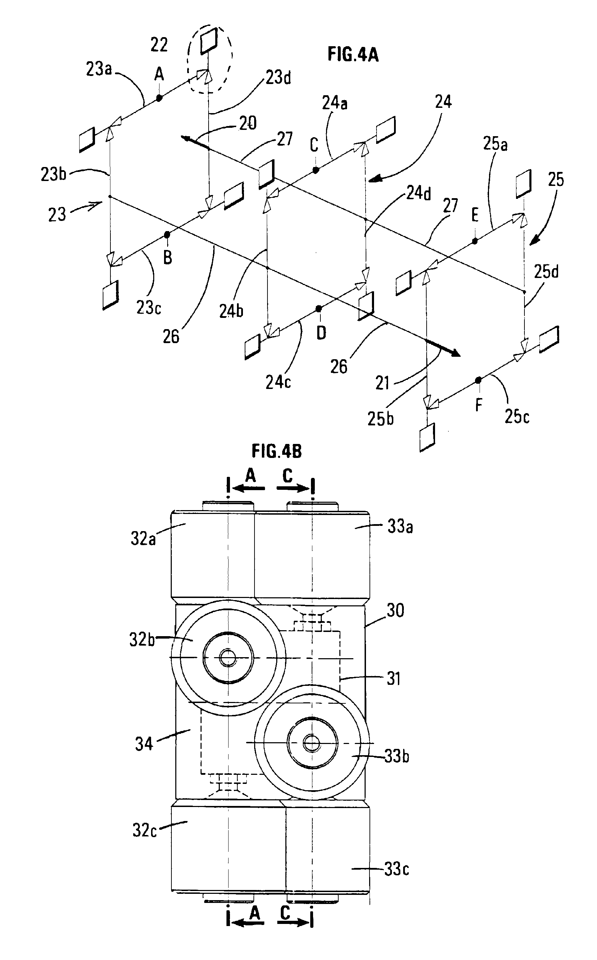

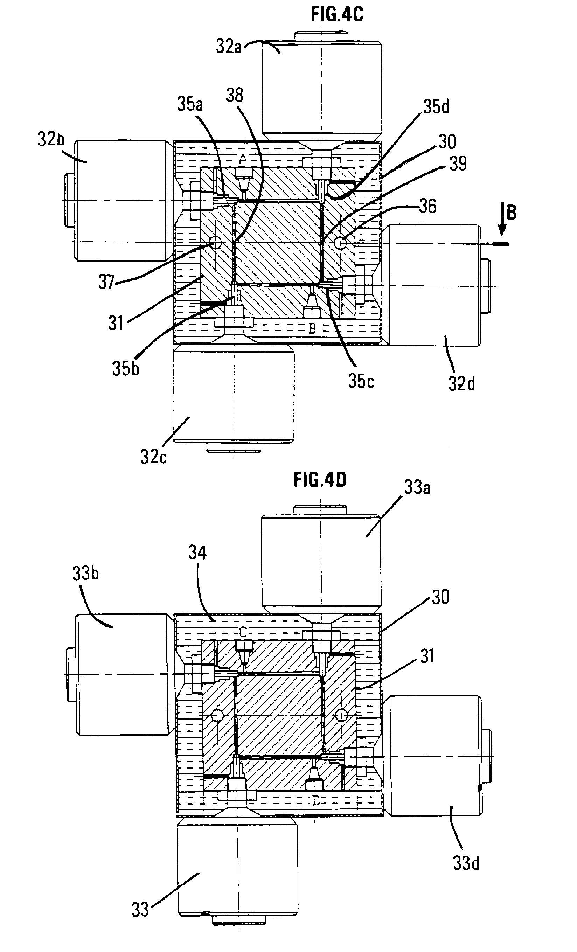

Un exemple de réalisation des moyens de distribution 5 est illustré par les figures 4a, 4b, 4c, et 4d.

La figure 4a explique le principe de la vanne de sélection, qui peut être à 2, 4, 6, ..., 2n, voies d'entrée et à deux voies de sortie. Les deux voies de sorties sont référencées 20 et 21. Dans le cas représenté ici, soit à 6 voies d'entrées, celles-ci sont référencées A, B, C, D, E, et F. La référence 22 désigne un élément d'obturation d'un conduit, par exemple un pointeau coopérant avec un siège conique, activé par un opérateur de type piston pneumatique ou hydraulique. La conception de la présente vanne est basée sur un, ou plusieurs conduits en boucle fermée (23, 24, 25); Chaque boucle est divisée en quatre tronçons de conduits: 23a, 23b, 23c, 23d; 24a, 24b, 24c, 24d; 25a, 25b, 25c, 25d. Chaque tronçon est délimité par un élément d'obturation 22. Sur chacune des boucles 23, 24, ou 25, il y a deux conduits pour les deux voies d'entrée A, B, ou C, D, ou E, F. Ces deux conduits d'entrées débouchent chacun sur deux tronçons opposés, 23a, 23c; 24a, 24c; 25a, 25c. Les deux autres tronçons communiquent chacun directement à une des deux voies de sortie 20, 21.

Ainsi, en considérant le cas le plus simple d'une telle vanne à une seule boucle (deux voies d'entrée), en commandant l'un ou l'autre des éléments d'obturation (22) qui encadrent un conduit d'entrée, on peut sélectionner la communication de cette entrée vers l'une ou l'autre des deux sorties.

Si l'appareillage de mesure comporte plus de deux réacteurs, la vanne de sélection comportera au moins deux boucles dont les conduits de sorties sont reliés entre eux, par exemple par les conduits 26, 27, comme représentés sur la figure 4a.

Une vanne de sélection de ce type permet d'utiliser des éléments d'obturation 22, par exemple de la marque NOVA SWISS, pouvant résister à la fois à de la haute pression et à de la haute température, comme cela est le cas en aval des réacteurs.

De plus, l'ensemble des conduits peut être dessiné pour constituer un volume mort minimal, ce qui est primordial pour la qualité des mesures et des comparaisons entre les cycles de réaction.

La figure 4b montre en vue de coté une vanne de sélection comportant un carter 30 contenant un bloc 31 dans lequel les conduits de passage de l'effluent ont été percés. Les références 32a, b, c et d (figure 4c) désignent les opérateurs pneumatiques qui actionnent les éléments d'obturation et d'étanchéité des différents tronçons de conduits. L'espace 34 est rempli d'un matériau isolant thermique. La figure 4b représente une vanne à deux boucles de conduits, c'est à dire selon la description ci-dessus, à quatre voies d'entrée (pour les réacteurs 3a, 3b, 3c et 3d) et deux voies de sortie. On note la disposition en quinconce des opérateurs pneumatiques de façon que la distance entre les deux plans contenant les deux boucles de conduits soit minimale. Ainsi, la longueur des conduits internes (notamment 26, 27) est réduite, ce qui diminue les volumes morts.

La figure 4c est une coupe selon le plan AA (figure 4b). Les quatre tronçons de conduits sont réalisés par quatre perçages non débouchant effectués dans le bloc 31. Les orifices d'entrées (35a, b, c, d) sont usinés de manière à recevoir la tige pointeau de l'élément d'obturation et d'étanchéité et les garnitures de joints du type presse-étoupe. Pour une tenue à des températures moyennes d'environ 250°C, les garnitures d'étanchéité peuvent être choisies en PEEK (polyetheretherketone).

Des perçages 36 et 37 dans le bloc 31 sont utilisés pour placer des éléments de chauffage et/ou de régulation.

Les références 38 et 39 indiquent les conduits reliant les tronçons de boucles aux deux sorties de la vanne de sélection.

La figure 4d est une vue de la coupe CC par le plan contenant la deuxième boucle de conduits. La structure est identique à celle de la première boucle illustrée par la figure 4c, si ce n'est que les éléments d'obturation et d'étanchéité sont disposés selon une autre direction (à 90 degrés) de façon que les opérateurs 33a, b, c d soient en quinconce par rapport aux opérateurs 32a, b, c, d.

L'analyseur (7) permet l'analyse détaillée des produits gazeux de la réaction chimique. Cet analyseur est équipé d'une vanne, par exemple de marque VALCO, de prélèvement d'échantillon de ces produits. L'analyseur peut être un chromatographe en phase gaz, c'est-à-dire équipé d'une ou plusieurs colonnes chromatographiques capillaires ou non séparant les produits de réaction par différence de temps de rétention et de détecteurs à ionisation de flamme. Cet analyseur peut être par exemple un modèle 5890 de marque HEWLETT PACKARD ou encore GC2000 de marque THERMO QUEST. La colonne capillaire peut être par exemple apolaire de type PONA de 50 m de longueur et 0,2 mm de diamètre.

En sortie des systèmes de séparation (4a à 4d), les fractions de produits liquides sont collectées dans plusieurs petits flacons (de 1 à 5 cm³ de volume) placés en barillet à la sortie d'une vanne de sélection. Ce système (6a à 6d) permet la mesure par pesée des flacons de la quantité de liquide collectée pendant une période de fonctionnement donnée et l'analyse directe de ces fractions liquides par l'analyseur (8). Cet analyseur est un chromatographe en phase gaz équipé d'un échantillonneur automatique auquel s'adaptent les flacons de collection et d'un ensemble permettant de réaliser des distillations simulés. Cette fonctionnalité est schématisée par les liens 14, 15, 16 et 17 entre les moyens de collectes des fractions liquides 6a, 6b, 6c, 6d.

Le bilan matière nécessaire au calcul des performances est réalisé à partir des analyses des fractions liquide et gazeuse et des mesures du volume de gaz et du poids de liquide recueillis sur une période donnée.

Le système de contrôle commande (9) gère l'ensemble des régulations de température, pression, débit, vannes et actionneurs divers. Ce système est bâti autour d'un automate S7-400 de marque SIEMENS et d'un logiciel de supervision FIX-DEMACS d'Intellution.

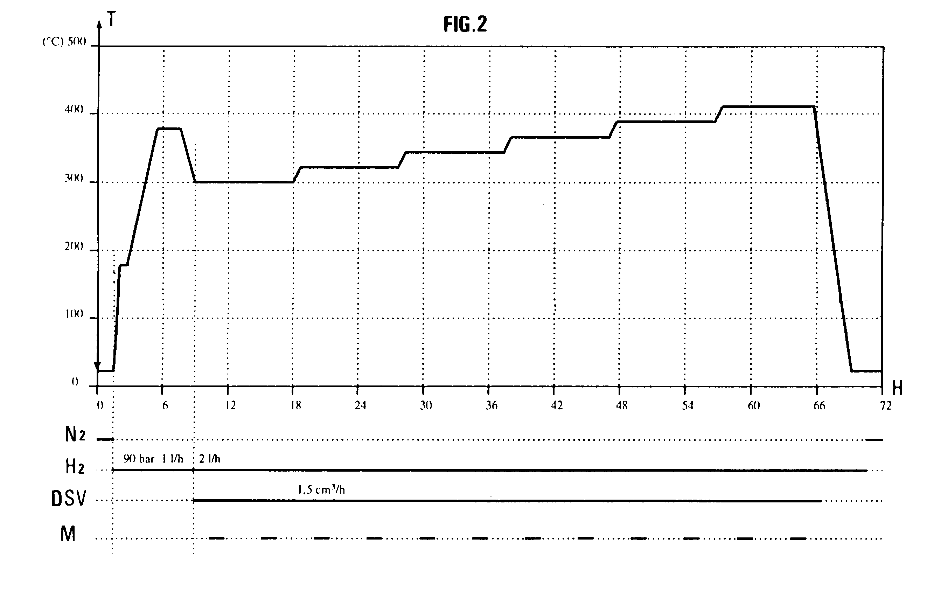

Ce système permettant de réaliser des cycles complets d'utilisation en parallèle des réacteurs 3a, 3b, 3c, 3d. Typiquement ces cycles se déroulent de façon complètement autonome selon plusieurs phases successives : test pression de l'ensemble, purge par un gaz inerte, activation du catalyseur si nécessaire, réaction avec mesure des performances et finalement purge de l'installation avant arrêt. Un exemple de cycle est montré sur la figure 2. Le déroulement du cycle est repéré par l'évolution de la température T du réacteur en fonction du temps H. Les périodes d'injection des réactifs et de réalisation des analyses sont indiqués en fonction du temps. Un distillat sous vide (DSV) est injecté à partir de 9H au débit de 1,5 cm³/h avec 21/h d'hydrogène. Des étapes de mesures M sont effectuées régulièrement, généralement au rythme d'au moins une par pallier de température.

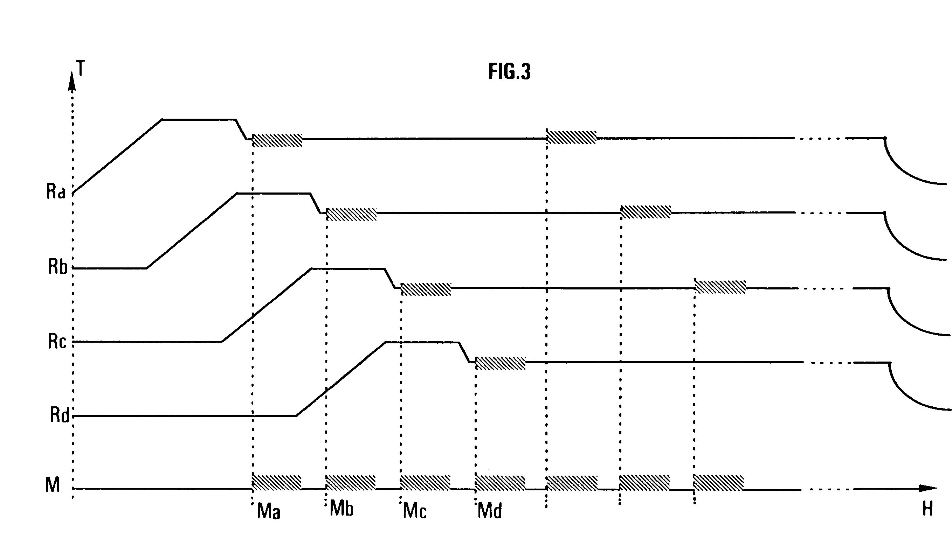

Le déroulement des cycles de chacun des réacteurs est simultané. Un exemple de combinaison de ces cycles est donné sur la figure 3. Les effluents de chacun des réacteurs Ra, Rb, Rc, Rd sont analysés tour à tour pendant les étapes Ma, Mb, Mc, Md. On remarque donc, que malgré la durée de chaque cycle d'essai, la possibilité de sélectionner un réacteur l'un après l'autre pour effectuer une mesure sur l'effluent, permet d'effectuer quatre tests (dans le cas présent) pratiquement dans la même durée.

### Exemple d'utilisation :

Quatre catalyseurs d'hydroconversion référencés A, B, C et D contiennent tous comme phase active métallique du Ni et du Mo et comme phase acide une zéolithe de structure Y mais à des teneurs différentes. On cherche à faire une évaluation rapide de ces quatre échantillons en terme d'activité et de sélectivité globale. Pour ce faire, un échantillon (1 g) de chacun de ces catalyseurs est placés dans un des quatre réacteurs de l'appareillage selon invention. Un distillat sous vide (DSV) hydrotraité présentant les caractéristiques suivantes est utilisé comme réactif liquide :

| | |
|---|---|
| masse volumique | 0.871 g/cm³ |
| point écoulement | 45°C |
| teneur en soufre | 10 ppm poids |
| teneur en azote | 3 ppm poids |
| viscosité 50°C | 25 cSt |
| point initial distillation | 340°C |
| point 5% | 379°C |
| point 10% | 397°C |
| point 30% | 429°C |
| point 50% | 446°C |
| point 70% | 462°C |
| point final distillation | 501°C |

Les conditions opératoires retenues, identiques pour chacun des réacteurs, sont les suivantes :
- pression entrée : 9,0 10⁶ Pa
- débit de réactif liquide : 0,800 g/h
- débit réactif gaz H2 : 0,80 l/h
- température : 5 paliers successifs (365, 375, 385, 395 et 410°C)

Au préalable à la phase de réaction proprement dite, une phase d'activation dite de sulfuration des catalyseurs est réalisée. Ce traitement consiste à injecter dans le réacteur le composé soufré diméthyldisulfure dissous (1,0% poids) dans du normal heptane. Les autres conditions de ce traitement sont les suivantes :
- pression entrée : 6,0 10⁶ Pa
- débit nC7H16/C2H6S2 : 0,650 g/h
- débit réactif gaz H2 : 0,60 l/h
- température : 350°C
- durée : 2 h

Pendant les paliers de température de la phase de réaction, les volumes de gaz et les poids de liquide produits sont mesurés pendant des périodes de 1/2h. Dans le même temps, l'analyses de ces fractions gazeuses et liquides sont réalisées. L'ensemble de ces conditions de fonctionnement est programmé dans l'automate. Les cycles correspondants sont voisins des exemples montrés en figures 2 et 3. Pendant ce temps, il n'y a aucune intervention de l'opérateur.

Les résultats analytiques obtenus sont utilisés pour calculer la conversion du distillat sous vide en produits de point d'ébullition inférieur à 380°C et la sélectivité pour la production de coupes distillant entre 150 et 380°C qui sont les produits recherchés. Les conversions et sélectivité ainsi obtenues sont présentées dans le tableau suivant :

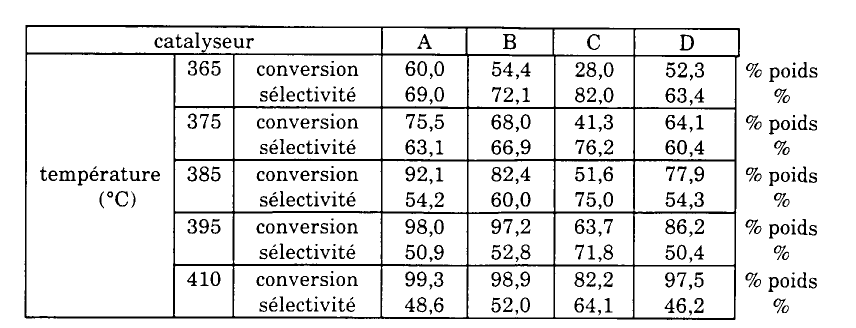

L'activité d'un catalyseur est représenté par le niveau de conversion atteint pour une température donnée. Les résultats montrent clairement qu'il existe des écarts importants entre ces solides catalytiques. L'échantillon A se révèle être le plus actif quelque soit la température, alors que l'échantillon C est le plus sélectif.

Appliqué à la sélection de solides catalytiques, l'appareillage selon l'invention permet donc d'évaluer rapidement, en parallèle et avec précision plusieurs solides catalytiques.

## Revendications

1. Appareillage pour effectuer des mesures sur un effluent résultant d'une réaction chimique ayant lieu dans un réacteur contenant un catalyseur, caractérisé en ce qu'il comporte en combinaison:
- au moins deux réacteurs,
- des moyens d'injection d'au moins une charge dans chacun des réacteurs,
- des moyens de séparation des phases gaz et liquide en aval de chacun des réacteurs,
- des moyens de distribution pour diriger la phase gazeuse issue des moyens de séparation vers des premiers moyens d'analyse et de mesure, pendant que les autres phases gazeuses issues des autres séparateurs sont dirigées vers une évacuation,
- des seconds moyens d'analyse et de mesure sur la phase liquide issue des moyens de séparation,
- des moyens de contrôle et de commande automatiques de la réaction chimique dans lesdits réacteurs, du cycle de l'analyse et de la mesure sur la phase gazeuse, et du cycle d'analyse et de mesure sur la phase liquide.

2. Appareillage selon la revendication 1, dans lequel lesdits moyens de distribution comportent au moins deux voies d'entrée et deux voies de sorties, au moins un conduit en boucle fermée divisée en quatre tronçons par quatre éléments d'obturation commandés, en ce que chacune desdites quatre voies communique avec un seul tronçon de façon que les voies d'entrée soient liées à deux tronçons opposés et lesdites voies de sortie liées aux deux autres tronçons.

3. Appareillage selon l'une des revendications 1 ou 2, caractérisé en ce qu'il comporte quatre réacteurs.

4. Appareillage selon la revendication 3, dans lequel lesdits moyens de distribution comportent deux conduits en boucle et en ce que lesdites voies de sortie communiquent entre elles deux à deux de façon à constituer un dispositif de distribution à quatre voies d'entrées et deux voies de sorties.

5. Appareillage selon l'une des revendications précédentes, dans lequel lesdits réacteurs ont un diamètre interne compris entre 0,5 et 3 cm, de préférence entre 1 et 2 cm, une longueur comprise entre 10 et 50 cm, de préférence entre 15 et 25 cm.

6. Méthode d'analyse et de mesure sur un effluent produit par une réaction chimique ayant lieu dans un réacteur contenant un catalyseur, dans laquelle on effectue les étapes suivantes:
- on dispose d'au moins deux réacteurs,
- on injecte au moins une charge dans chacun des réacteurs,
- on sépare l'effluent produit par chacun des réacteurs en une phase liquide et une phase gazeuse,
- on dirige alternativement la phase gazeuse vers des moyens de mesure et d'analyse par des moyens de distribution,
- on effectue des analyses et des mesures sur la phase liquide,
- on contrôle le déroulement des cycles de réaction, d'analyse et de mesure de chacune des phases à l'aide de moyens de contrôle et de commande automatiques.

7. Méthode selon la revendication 6, dans laquelle on détermine les bilans matières de chacune des réactions.

8. Méthode selon l'une des revendications 6 ou 7, dans laquelle on contrôle la température et la pression des effluents gazeux entre la sortie des moyens de séparation et les moyens de mesure et d'analyse, y compris dans les moyens de distribution, de façon que ledit effluent reste gazeux.

9. Application de la méthode et de l'appareillage selon l'une des revendications précédentes, pour comparer les caractéristiques de catalyseurs différents employés dans chacun des réacteurs.

10. Application de la méthode et de l'appareillage selon l'une des revendications précédentes, pour déterminer les conditions optimales de mise en oeuvre d'un catalyseur pour une réaction déterminée en faisant varier les paramètres de ladite réaction dans chacun des réacteurs.
